Europäisches Patentamt

(19) European Patent Office

Office européen des brevets

(11) Numéro de publication: **0 120 542**
**B1**

(12) **FASCICULE DE BREVET EUROPEEN**

(45) Date de publication du fascicule du brevet:
11.06.86

(51) Int. Cl.⁴: **A 61 C 3/02**, **A 61 C 5/02**,
**B 27 G 13/02**

(21) Numéro de dépôt: 84200421.0

(22) Date de dépôt: 26.03.84

(54) **Instrument dentaire pour l'alésage des canaux.**

(30) Priorité: 29.03.83 CH 1725/83

(43) Date de publication de la demande:
03.10.84 Bulletin 84/40

(45) Mention de la délivrance du brevet:
11.06.86 Bulletin 86/24

(84) Etats contractants désignés:
AT DE FR GB IT SE

(56) Documents cités:
DE - A - 3 035 231
US - A - 1 328 430
US - A - 3 327 749
US - A - 3 667 857

(73) Titulaire: FLUCKIGER ET HUGUENIN S.A., Chapelle, 6a,
CH-2300 La Chaux-de-Fonds (CH)

(72) Inventeur: Berlin, Pierre, Avenue Léopold-Robert, 21,
CH-2300 La Chaux-de-Fonds (CH)

(74) Mandataire: Meylan, Robert Maurice et al, c/o BUGNION
S.A. 10, route de Florissant Case Postale 375,
CH-1211 Genève 12 - Champel (CH)

## Description

La présente invention a pour objet un instrument dentaire pour l'alésage des canaux, présentant au moins une arête de coupe s'étendant le long de l'instrument.

Les instruments dentaires connus pour l'alésage des canaux comportent une, deux, trois, voire quatre aretes coupantes continues engendrées par un usinage approprié et réalisées dans la masse, à partir d'une ébauche de section circulaire ou par torsadage d'un barreau de section triangulaire ou carrée. Les arêtes de coupe, sur les instruments terminés, s'enroulent autour de l'axe longitudinal de l'instrument selon une hélice qui favorise l'évacuation des matériaux arrachés à la paroi du canal. Le pas de l'hélice est variable selon les types d'instruments et selon les fabricants. Les arêtes de coupe travaillent essentiellement en rabatoge, de sorte que l'efficacité de ces arêtes n'est pas très grande et que le couple résistant exercé sur l'instrument peut par contre être relativement très élevé. Cet effet est en outre renforcé par la tendance au vissage de l'instrument dans le canal du à la présence d'arêtes de coupe hélicoïdales.

La présente invention a principalement pour but d'augmenter l'efficacité de coupe des instruments dentaires du type défini plus haut.

A cet effet, l'instrument dentaire selon l'invention est caractérisé par le fait que cette au moins une arête de coupe présente plusieurs interruptions en forme d'entaille.

Chaque interruption forme sur l'arête de coupe deux dents agressives, aussi bien en rotation qu'en translation et agissant dans les deux sens de rotation. Ces interruptions ont pour effet d'augmenter l'efficacité de coupe d'un facteur de l'ordre de 50 à 100%.

Il est certes connu depuis très longtemps d'entailler les arêtes d'un outil de coupe rotatif à arêtes hélicoïdales, par exemple pour réaliser une fraise permettant d'usiner des rainures ou pour découper (US-A-1.328.430). De telles fraises ont naturellement également été utilisées, sous une forme adaptée, en chirurgie osseuse (DE-A-3.035.231). Malgré cela personne jusqu'à ce jour n'a songé à appliquer une telle technique à un instrument dentaire pour l'alésage des canaux. Ceci peut s'expliquer par le fait que, pour l'homme du métier, les instruments à canaux sont des outils très différents des fraises de part leur fabrication (généralement torsadage), leur faible diamètre, leur necessaire flexibilité qui leur permet de suivre la courbure des canaux dentaires et leur utilisation. Il convient de rappeler que l'instrument pour l'alésage de canaux dentaires doit pénétrer dans le canal dentaire jusqu'au foramen apical et qu'il présente à cet effet une extrémité très fine et très souple.

Dans un instrument présentant au moins deux arêtes de coupe, il est avantageux de disposer les interruptions de telle manière qu'à la hauteur de chaque interruption on trouve également une arête de coupe non entaillée. L'état de surface obtenu par rotation de l'instrument est alors identique à l'état de surface obtenue par les instruments antérieurs, car la matière du canal non enlevée dans l'espace de l'interruption est enlevée par la partie d'arête non entaillée se trouvant à la même hauteur lors de la rotation de l'instrument. On a en quelque sorte un recouvrement des zones non coupantes par des zones coupantes. Avec un instrument à une seule arête de coupe hélicoïdale cet état de surface est obtenu par un mouvement combiné de rotation et de translation.

La présence des interruptions a en outre pour effet de fractionner le "copeau" soulevé par l'arête, respectivement chaque arête de coupe. L'effort exercé est donc moins important et l'instrument est moins sollicité en torsion.

Les interruptions sont avantageusement disposées selon une hélice de sens contraire à l'hélice respectivement aux hélices des arêtes de coupe. Ceci a pour effet avantageux de réduire le phénomène de vissage rencontré dans les instruments connus, phénomène susceptible d'entraîner un blocage de l'instrument dans le canal, éventuellement suivi d'une cassure.

L'utilisation d'hélices de sens opposé a en outre pour avantage d'augmenter la souplesse des instruments et de les rendre plus aptes à suivre la courbure des canaux.

Le dessin annexé représente, à titre d'exemple, quelques formes d'exécution de l'invention.

La figure 1 représente une première forme d'exécution à trois arêtes de coupe hélicoïdales.

La figure 2 représente une première forme d'exécution à trois arêtes de coupe hélicoïdale.

La figure 3 représente une quatrième forme d'exécution, a trois arêtes de coupe hélicoïdales.

La figure 4 représente une cinquième forme d'exécution à quatre arêtes de coupe rectilignes.

La figure 5 représente une seconde forme d'exécution à une arête de coupe hélicoïdale.

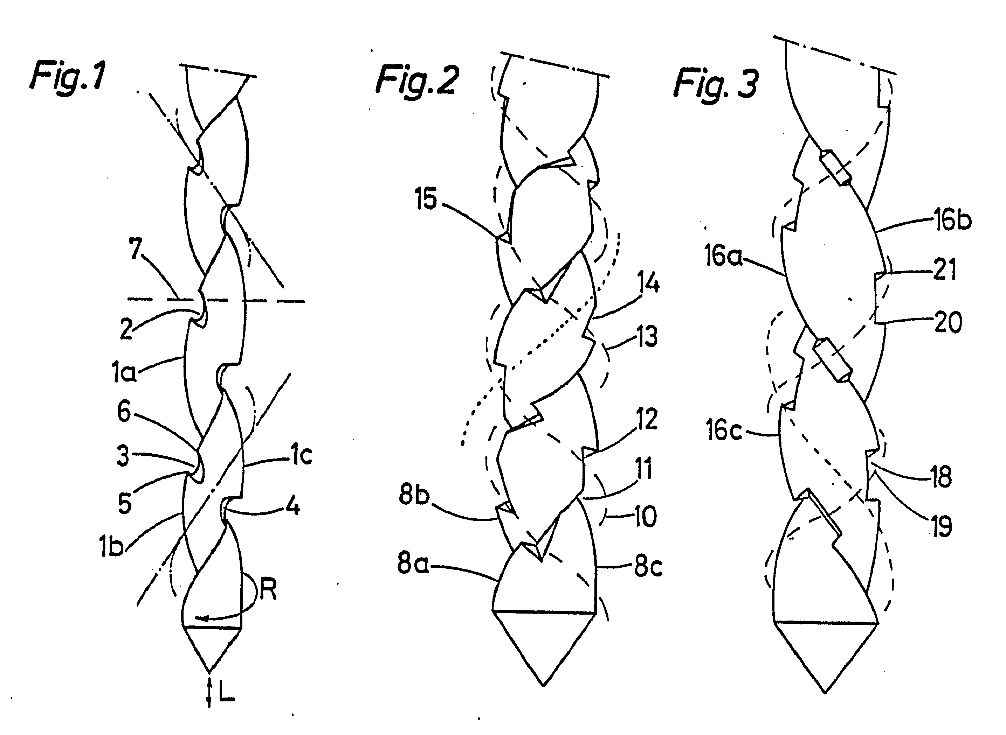

La figure 1 représente un instrument selon une première forme d'exécution, présentant trois arêtes de coupe hélicoïdales 1a, 1b et 1c, en hélice à droite, obtenues par usinage d'une barre ou par torsadage d'une barre de section triangulaire. Ces arêtes de coupe présentent des interruptions telles que 2, 3 et 4 disposées selon une hélice à gauche de même pas que les hélices des arêtes de coupe. Ces interruptions sont obtenues, par exemple, par meulage, d'où le profil arrondi des entailles obtenues. On voit que ces interruptions ont pour effet de former deux dents agressives 5 et 8 qui augmentent l'efficacité de coupe. A l'emplacement des interruptions 2, 3 et 4, la matière de la paroi du canal dentaire n'est pas enlevée lorsque l'instrument tourne dans le sens normal R. Il se forme dès lors un bourrelet à la surface du canal. Etant donnè toutefois qu'au niveau 7 de chaque interruption, la deuxième arête de coupe, respectivement la troisième arête, ne présente pas d'interruption, ce bourrelet est enlevé par cette deuxième arête, respectivement cette troisième arête, lors de la rotation de l'instrument. Il convient de noter que l'instrument est généralement également utilisé en translation selon un mouvement de va-et-vient L. Dans ce cas les dents 5 et 8 travaillent également.

Dans la forme représentée à la figure 2, l'instrument comporte également trois arêtes de coupe hélicoïdales 8a, 8b et 8c enroulées selon des hélices à droite. Un premier groupe d'interruptions des arêtes de coupe est formé selon une première hélice à gauche 10. Ces interruptions ont la forme d'entaille 11 en forme de dièdre, c'est-à-dire présentant un profil approximativement triangulaire, de telle sorte qu'elles forment des dents agressives 12 à l'extrémité des interruptions situées vers l'arrière de l'instrument. Ces dents 12 ont une efficacité vers l'avant c'est-à-dire lorsque l'instrument tourne à droite, dans le sens de la flèche R, figure 1. Un second groupe d'interruptions est disposé selon une seconde hélice à gauche 13 parallèle à l'hélice 10. Ces interruptions 14 ont la même forme que les interruptions 11, mais sont inversées par rapport à celles-ci, selon l'axe de l'instrument, de telle sorte qu'elles présentent une dent 15 à leur extrémité située du côté de la pointe de l'instrument, ces dents étant particulièrement efficaces lorsque l'instrument tourne à gauche. On remarque qu'au niveau de chaque interruption on trouve une partie d'une autre arête de coupe non interrompue.

Dans la forme d'exécution représentée à la figure 3, on a à nouveau trois arêtes de coupe hélicoïdales 16a, 16b et 16c mais selon des hélices à gauche. Les interruptions 18, constituées par des entailles de section rectangulaire, sont situées sur une hélice à droite 19 de même pas que les hélices 16a, 16b, 16c. Ces interruptions 18 forment deux dents agressives 20 et 21. Au niveau de chaque interruption on trouve une partie non interrompue d'une autre arête de coupe.

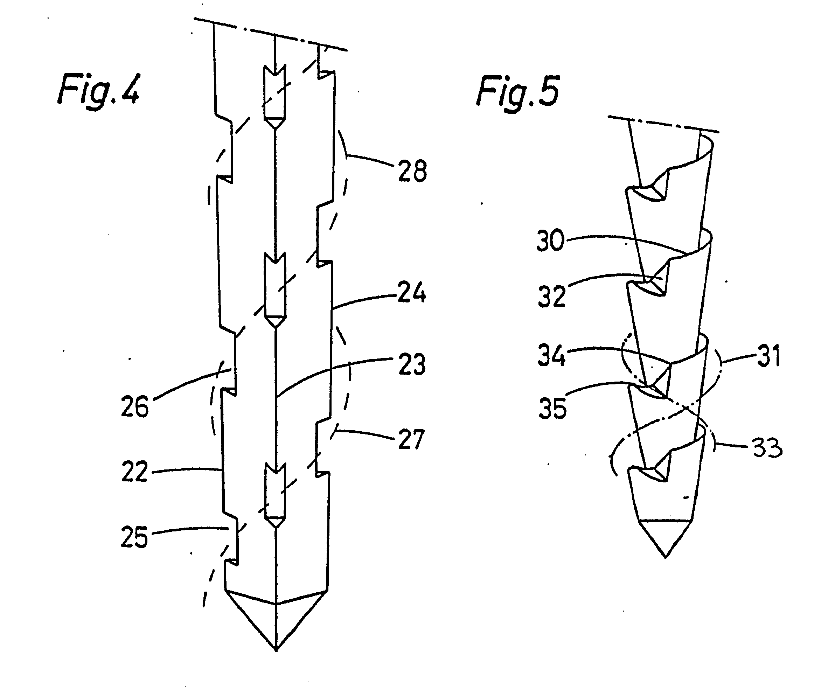

L'instrument selon la quatrième forme d'exécution, représenté à la figure 4, est constitué d'un barreau pyramidal de section carrée et comportant par conséquent quatre arêtes de coupe rectilignes légérement convergentes, dont trois sont visibles, 22, 23, 24. Ces arêtes sont interrompues par deux groupes d'entailles rectangulaires 25 et 28, les entailles 25 étant situées sur une première hélice 27 s'enroulant à droite, et les entailles 28 étant situées sur une seconde hélice 28, de même pas et de même sens que l'hélice 27. A chaque niveau, sur la hauteur d'une interruption, on trouve une partie non interrompue d'une autre arête de coupe de l'instrument venant enlever la matière laissée par cette partie d'interruption lors de la rotation de l'instrument. En variante le barreau pourrait être de section triangulaire de telle sorte que l'instrument présente trois arêtes de coupe.

L'instrument selon la cinquième forme d'exécution, représentée à la figure 5, présente une seule arête de coupe 30 s'étendant selon une hélice 31 à faible pente, mais dont la section droite forme un angle aigu. Cette arête de coupe 30 est interrompue par des entailles en dièdre 32 disposées sur une hélice 33 de même pas que l'hélice 31 mais de sens opposé. Chaque entaille forme deux dents agressives 34 et 35. Dans cette forme d'exécution l'action des dents 34 est particulièrement importante en rotation à droite. En plus elles brisent les copeaux qu'aurait tendance à former l'arête de coupe 30.

Particulièrement dans les formes d'exécution selon les figures 1 et 4, on constate que les interruptions ont pour effet d'augmenter la souplesse de l'instrument et par conséquent de les rendre plus aptes à suivre les courbures des canaux dentaires.

De nombreuses variantes d'exécution sont possibles sans sortir du cadre de l'invention. Par exemple, les interruptions ne doivent pas nécessairement être disposées sur une hélice mais peuvent au contraire être réparties sans relation aucune avec une hélice. Au lieu dêtre situées sur une hélice de même pas et de sens opposé à l'hélice des arêtes de coupe, les interruptions peuvent également être situées sur une hélice de même sens, mais de pas différent de l'hélice principale. Le nombre d'arêtes de coupe peut être quelconque.

**Revendications**

1. Instrument dentaire pour l'alésage des canaux présentant au moins une arête de coupe (30, 1a, 1b, 1c, 8a, 8b, 8c, 16a, 16b, 16c, 22, 23, 24) s'étendant le long de l'instrument, caractérisé par le fait que cette au moins une arête de coupe présente plusieurs interruptions en forme d'entailles (32, 2, 3, 4, 11, 14, 18, 25).

2. Instrument selon la revendication 1, présentant au moins deux arêtes de coupe, caractérisé par le fait que toute section droite de l'instrument est telle qu'au niveau de chaque interruption et sur toute la longueur de cette interruption, on trouve également une partie d'arête de coupe non interrompue.

3. Instrument selon l'une des revendications 1 ou 2, caractérisé par le fait que les interruptions sont situées sur au moins une hélice (10, 13, 19, 27, 28, 33).

4. Instrument selon la revendication 3, caractérisé par le fait que les interruptions sont situées sur deux hélices de sens opposé.

5. Instrument selon la revendication 3, caractérisé par le fait qu'il comprend plusieurs arêtes de coupe rectilignes (22, 23, 24).

6. Instrument selon la revendication 3, comprenant au moins une arête de coupe hélicoïdale, caractérisé par le fait que les interruptions sont disposées sur au moins une hélice de sens opposé à l'hélice de l'arête de coupe, respectivement des arêtes de coupe.

7. Instrument selon la revendication 3, comprenant au moins une arête de coupe hélicoïdale, caractérisé par le fait que les interruptions sont disposées sur une hélice de même sens que l'hélice de l'arête de coupe, mais de pas différent,

8. Instrument selon la revendication 5, caractérisé par le fait qu'il comprend un premier groupe d'interruptions (11) en forme d'entaille disposées sur une première hélice (10) de manière a former des dents (12) aux extrémités des interruptions situées du côté de l'avant de l'instrument et un second groupe d'interruptions (14) en forme d'entaille disposées sur une seconde hélice (13) de manière à former des dents (15) aux extrémités des interruptions situées du côté de l'arrière de l'instrument.

9. Instrument selon l'une des revendications 6 ou 7, caractérisé par le fait que les interruptions présentent une section approximativement triangulaire.

10. Instrument selon l'une des revendications 6 ou 7, caractérisé par le fait que les interruptions présentent une section approximativement rectangulaire.

**Patentansprüche**

1. Werkzeug zum Ausbohren von Zahnkanälen mit wenigstens einer Schneidkante (1a, 1b, 1c: 8a, 8b, 8c; 16a, 16b, 16c; 22, 23, 24; 30), die entlang des Werkzeuges verläuft, dadurch gekennzeichnet, dass diese wenigstens eine Schneidkante mehrere Unterbrechungen in Form von Einschnitten (2, 3, 4; 11, 14: 18; 25, 26; 32) aufweist.

2. Werkzeug nach Anspruch 1 mit wenigstens zwei Schneidkanten, dadurch gekennzeichnet, dass der ganze Querschnitt des Werkzeuges so ausgebildet ist, dass in Hohe jeder Unterbrechung und auf der Sanzen Länge dieser Unterbrechung sich auch ein nicht unterbrochener Schneidkantenteil befindet.

3. Werkzeug nach Anspruch 1 oder 2, dadurch gekennzeichnet, dass die Unterbrechungen auf wenigstens einer Schraubenlinie (10, 13; 19; 27, 28: 33) angeordnet sind.

4. Werkzeug nach Anspruch 3, dadurch gekennzeichnet, dass die Unterbrechungen auf zwei gegensinnigen Schraubenlinien angeordnet sind.

5. Werkzeug nach Anspruch 3, dadurch gekennzeichnet, dass mehrere gradlinige Schneidkanten (22, 23, 24) vorgesehen sind.

6. Werkzeug nach Anspruch 3 mit wenigstens einer schraubenförmigen Schneidkante, dadurch gekennzeichnet, dass die Unterbrechungen auf wenigstens einer Schraubenlinie angeordnet sind, welche gegensinnig zu der Schraubenlinie der Schneidkante beziehungsweise der Schneidkanten verläuft.

7. Werkzeug nach Anspruch 3 mit wenigstens einer schraubenförmigen Schneidkante, dadurch gekennzeichnet, dass die Unterbrechungen auf einer Schraubenlinie angeordnet sind, welche gleichsinnig wie die Schraubenlinie der Schneidkante, jedoch mit unterschiedlicher Steigung verläuft.

8. Werkzeug nach Anspruch 6, dadurch gekennzeichnet, dass eine erste Gruppe von Unterbrechungen (11) in Einschnittform so auf einer ersten Schraubenlinie (16) angeordnet ist, dass Zähne (12) an den Enden der Unterbrechungen nach der Vorderseite des Werkzeuges gebildet werden, und dass eine zweite Gruppe von Unterbrechungen (14) in Einschnittsform so auf einer zweiten Schraubenlinie (13) angeordnet ist, dass Zähne (16) an den Enden der Unterbrechungen nach der Ruckseite des Werkzeuges gebildet werden.

9. Werkzeug nach Anspruch 6 oder 7, dadurch gekennzeichnet, dass die Unterbrechungen einen etwa dreieckigen Querschnitt aufweisen.

10. Werkzeug nach Anspruch 6 oder 7, dadurch gekennzeichnet, dass die Unterbrechungen einen etwa rechteckigen Querschnitt aufweisen.

**Claims**

1. Dental tool for reaming root canals, of the type comprising at least one cutting edge (36, 1a, 1b, 1c, 8a, 8b, 8c, 16a, 16b, 16c, 22, 23, 24) extending along the tool, characterized in that a plurality of notch-forming gaps are formed along said at least one cutting edges.

2. Dental tool according to claim 1, having at least two cutting edges, characterized in that any cross-section of the tool is such that at the level of each gap and throughout the length of this gap there is also a cutting edge section without any gap.

3. Dental tool according to any of claims 1 or 2, characterized in that the gaps are located on at least one helix (10, 13, 19, 27, 26, 33).

4. Dental tool according to claim 3, characterized in that said gaps are located on two helices having opposite directions.

6. Dental tool according to claim 3, characterized in that it comprises a plurality of rectilinear cutting edges (22, 23, 24).

6. Dental tool according to claim 3, comprising at least one helical cutting edge, characterized in that said gaps are disposed on at least one helix having a direction opposed to the direction of the cutting edge or edges.

7. Dental tool according to claim 3, comprising at least one helical cutting edge, characterized in that said gaps are disposed on a helix having the same direction as the helix of the cutting edge but a different pitch.

8. Dental tool according to claim 6, characterized in that it comprises a first set of gaps (11) consisting of notches disposed on a first helix (10) so as to provide teeth (12) at the ends of the gaps which are located on the forward side of the tool and a second set of gaps (14) consisting of notches disposed on a second helix (13) so as to provide teeth (16) at the ends of the gaps which are located on the rear side of the tool.

9. Dental tool according to any of claims 6 or 7, characterized in that said gaps have a substantially triangular cross-sectional configuration.

10. Dental tool according to any of claims 6 or 7, characterised in that said gaps have a substantially rectangular cross-sectional configuration.

Fig.1

7
2
1a
6
3
5
1b
1c
4
R
L

Fig.2

15
14
13
12
11
10
8b
8a
8c

Fig.3

16a
16c
16b
21
20
18
19

0 120 542

Fig.4

Fig.5